# EUROPEAN PATENT SPECIFICATION

(11) **EP 2 785 758 B1**
(45) Date of publication and mention of the grant of the patent: **28.10.2015**
(21) Application number: 12791394.5
(22) Date of filing: 13.11.2012
(51) Int. Cl.: C08G 18/50, C08G 18/10, C08G 18/12, C09D 175/04, C08G 18/40

(54) **CLEAR COAT COATING COMPOSITION**
KLARLACKBESCHICHTUNGSZUSAMMENSETZUNG
COMPOSITION DE REVÊTEMENT POUR COUCHE TRANSPARENTE

(30) Priority: 30.11.2011 US 201161565052 P
(43) Date of publication of application: 08.10.2014
(73) Proprietor: Axalta Coating Systems IP Co. LLC, Wilmington, DE 19801 (US)
(72) Inventor: FLOSBACH, Carmen, D-42287 Wuppertal (DE); GRAWE, Thomas, 51371 Leverkusen (DE); HOHLER, Kristina, 68766 Hockenheim (DE)
(74) Representative: Maiwald Patentanwalts GmbH
(86) International application number: PCT/US2012/064889
(87) International publication number: WO 2013/081817

(56) References cited:
- EP-A1- 1 116 759
- DE-A1-102006 011 813

## Description

### Field of the Invention

The invention relates to a clear coat coating composition which can be used in a process for the preparation of an outer clear coat layer of an automotive multi-layer coating.

### Background of the Invention

Modern automotive multi-layer coatings typically comprise a two-layer topcoat consisting of a color- and/or special effect-imparting base coat layer and an outer clear coat layer on top of that base coat layer. The pigmented base coat layer provides the color of the automotive multi-layer coating and the clear coat has a protective as well as decorative function. It is desirable for the clear coat to be self-cleanable, i.e. to allow for easily washing off dirt from its surface just by the action of rain. Such clear coats are called easy-to-clean clear coats.

Easy-to-clean coating compositions have been developed which exhibit good initial self-cleanability due to a surface enrichment of hydrophobic substance in the easy-to-clean coating layer, see for example, WO 2007/104654 A1, US 2004/0127593 A1, US 5,597,874 and US 5,705,276.

"Initial self-cleanability" means the maximum level of self-cleanability that an easy-to-clean clear coat layer has at the beginning of its service life. However, the self-cleanability of easy-to-clean clear coats often suffers over time during which the easy-to-clean clear coat layer is exposed to the weather, i.e. its self-cleanability reduces over time as compared to its initial self-cleanability.

The self-cleanability of a coating layer overtime can be determined by the following method. First, the initial self-cleanability of a panel provided with the coating layer to be tested is determined by applying Leverkusen standard dirt 09 LD-40 (commercially available from wfk institute Krefeld, Germany) to all but a 4 centimeter portion of one end of the horizontally positioned panel. Dirt application is performed making use of a sieve. Three 25µl drops of deionized water are placed on the unsoiled area of the coated panel. The unsoiled end of the panel is slowly and continuously raised from the horizontal position to a 30° angle causing the water drops to move through the soiled area. After 5 minutes the position of the water drops is recorded and it is visually rated how much dirt the water drops on their move downwards have removed from the surface. The coated panel is then carefully cleaned to remove any remaining dirt and it is thereafter subjected to artificial weathering conditions (500 hours according to SAE J2527). Then the self-cleanability test is repeated followed by further cycles of artificial weathering and self-cleanability testing. Finally, self-cleanability data comprising the initial self-cleanability and self-cleanability after 500, 1000 and 2000 hours of artificial weathering are obtained and a trend can be estimated, if or to what extent the self-cleanability of the coating layer reduces over time when exposed to the weather.

### SUMMARY OF THE INVENTION

The invention relates to a clear coat coating composition with a resin solids content comprising a hydroxyl-functional binder component and a crosslinker component, wherein the hydroxyl-functional binder component comprises at least one hydroxyl-functional urethane component comprising at least one aliphatic polyether polyol having - OCH₂CₙF₂ₙ₋₁ groups with n = 1 or 2 as a building block, and wherein said - OCH₂CₙF₂ₙ₊₁ groups provide the clear coat coating composition with a fluorine content of 0.1 to 3 wt.% (weight%), calculated on the resin solids content of the clear coat coating composition.

### DETAILED DESCRIPTION OF THE EMBODIMENTS

In the description and the claims the term "aliphatic polyether polyol" is used. The phrase is intended to include moieties having linear, branched and/or cycloaliphatic groups in said polyether polyol.

In the description and the claims the term "aliphatic polyether polyol having -OCH₂CₙF₂ₙ₊₁ groups with n = 1 or 2" is used. For brevity, it is also called "fluorine-containing polyether polyol" herein.

The clear coat coating composition of the invention is liquid, contains organic solvent(s) and may have a solids content of, for example, 45 to 65 wt.%.

The solids content of the clear coat coating composition consists of the solids contributions of the resinous constituents (the resin solids content) of the clear coat coating composition plus the solids contributions of optionally present non-volatile components like pigments, fillers (extenders) and non-volatile additives.

It has been found that a clear coat layer exhibiting good optical appearance (smooth surface, high gloss) and having a sustainable easy-to-clean effect can be produced from the clear coat coating composition of the invention. In this context "sustainable easy-to-clean effect" means that the initial self-cleanability hardly suffers or does not suffer over the clear coat layer's lifetime or service life during which it experiences long-term exposure to the weather including exposure to sunlight as well as rain water to name only two strain factors.

The resin solids content of the clear coat coating composition comprises a hydroxyl-functional binder component and a crosslinker component, or, to be more precise, it comprises the solids contributions of the hydroxyl-functional binder component and of the crosslinker component. In an embodiment, the resin solids content of the clear coat coating composition consists of the hydroxyl-functional binder component and of the crosslinker component. The resin solids content of the clear coat coating composition may be in the range of, for example, 40 to 65 wt.%, based on the total clear coat coating composition.

The hydroxyl-functional binder component comprises at least one hydroxyl-functional urethane component which comprises at least one fluorine-containing polyether polyol as a building block. In other words, the at least one fluorine-containing polyether polyol is chemically incorporated in the at least one hydroxyl-functional urethane component. In still other words, the at least one fluorine-containing polyether polyol is covalently built-in in the at least one hydroxyl-functional urethane component via urethane linkages which represent the result of an addition reaction between some or all of the hydroxyl groups of the at least one fluorine-containing polyether polyol and isocyanate groups.

As already mentioned, the at least one fluorine-containing polyether polyol has -OCH₂CₙF₂ₙ₊₁ groups with n = 1 or 2. The oxygen atom in the formula -OCH₂CₙF₂ₙ₊₁ represents an ether bridge. The fluorine-containing polyether polyol has two or more unetherified free hydroxyl groups.

The fluorine-containing polyether polyol has a fluorine content provided by its -OCH₂CₙF₂ₙ₊₁ groups in the range of, for example, 24 to 40 wt.%.

The fluorine-containing polyether polyol may have a calculated molar mass in the range of, for example, 470 to 5000. The molar mass can be calculated from the fluorine-containing polyether polyol's empirical or structural formula, which in the case of an oligomer or polymer may take the form of an average formula.

In a preferred embodiment, the fluorine-containing polyether polyol is a polyether diol with the formula HO[CH₂C(CH₃)(CH₂OCH₂CF₃)CH₂O]ₓCH₂C(CH₃)₂CH₂-[OCH₂C(CH₃)(CH₂OCH₂CF₃)CH₂]_{y}OH with x+y = 6 on average, which is commercially available under the trade name POLYFOX™ PF-636 from OMNOVA Solutions, Fairlawn Ohio.

In another preferred embodiment, the fluorine-containing polyether polyol is a polyether diol with the formula HO[CH₂C(CH₃)(CH₂OCH₂C₂F₅)CH₂O]ₓCH₂C(CH₃)₂CH₂-[OCH₂C(CH₃)(CH₂OCH₂C₂F₅)CH₂]_{y}OH with x+y = 6 on average, which is commercially available under the trade name POLYFOX™ PF-656 also from OMNOVA Solutions.

The -OCH₂CₙF₂ₙ₋₁ groups of the at least one fluorine-containing polyether polyol chemically incorporated in the at least one hydroxyl-functional urethane component provide the clear coat coating composition with a fluorine content of 0.1 to 3 wt.%, preferably 0.2 to 1.5 wt.%, calculated on the resin solids content of the clear coat coating composition. The composition of the at least one hydroxyl-functional urethane component and its proportion in the hydroxyl-functional binder component is selected accordingly.

The total proportion of the at least one fluorine-containing polyether polyol chemically incorporated in the at least one hydroxyl-functional urethane component in the clear coat coating composition may be in the range of, for example, 0.5 to 8 wt.%, preferably 0.5 to 4 wt.%, calculated on the resin solids of the clear coat coating composition.

In an embodiment, the hydroxyl-functional urethane component is a polyurethane polyol binder. Its hydroxyl number is in the range of 50 to 300 mg of KOH/g. The polyurethane polyol binder is free of terminal groups of the formula -NHC(O)OR with R being a residue selected from C₁₋₁₂-alkyl residues, alkyl substituted or unsubstituted cycloaliphatic C₅₋₁₂-hydrocarbyl residues, C₁₋₅-alkoxy C₂₋₆-alkylene residues and C₁₋₅-alkyl-CO₂-C₂₋₁₂-alkylene residues. The polyurethane polyol binder may have a number-average molar mass (Mn) in the range of, for example, 800 to 10000.

All number-average molar mass data stated herein are number-average molar masses determined or to be determined by gel permeation chromatography (GPC; divinylbenzene-cross-linked polystyrene as the immobile phase, tetrahydrofuran as the liquid phase, polystyrene standards).

The production of polyurethane polyols is known to the person skilled in the art; in particular, they may be produced by reacting NCO-functional building blocks, i.e. polyisocyanate(s) with OH-functional building blocks, i.e. polyol(s).

The polyurethane polyol binder may be produced by reacting one or more polyisocyanates with one or more polyols, wherein the one or more polyols comprise the at least one fluorine-containing polyether polyol. In an embodiment, the polyol(s) consist of one or more, in particular one, fluorine-containing polyether polyol.

Examples of polyisocyanates suitable for the production of the polyurethane polyol binder can include trisisocyanatononane and diisocyanates like 1,6-hexane diisocyanate, tetramethylxylylene diisocyanate, isophorone diisocyanate, dicyclohexylmethane diisocyanate, cyclohexane diisocyanate, polyisocyanates derived from these diisocyanates, for example, uretidione or isocyanurate type polyisocyanates produced by di- or trimerization of these diisocyanates, polyisocyanates produced by reaction of these diisocyanates with water and containing biuret groups, urethane group containing polyisocyanates produced by reaction of these diisocyanates with polyols or a combination of said polyisocyanates.

As already mentioned, the at least one fluorine-containing polyether polyol may be the only polyol building block of the polyurethane polyol binder. However, it is also possible to additionally employ other polyol building blocks. Examples of such other additional polyol building blocks suitable for the production of the polyurethane polyol binder can include low molar mass polyols defined by empirical and structural formula as well as oligomeric or polymeric polyols with number-average molar masses of, for example, up to 800, for example, fluorine-free polyether polyols, polyester polyols or polycarbonate polyols. Examples of low molar mass polyols defined by empirical and structural formula can include diols like ethylene glycol, the isomeric propane- and butanediols, 1,5-pentanediol, 1,6-hexanediol, 1,10-decanediol, 1,12-dodecanediol, 1,4-cyclohexanedimethanol, hydrogenated bisphenol A, dimer fatty alcohol, neopentyl glycol, butylethylpropanediol, the isomeric cyclohexanediols, the isomeric cyclohexanedimethanols, tricyclodecanedimethanol, polyols with more than two hydroxyl groups like glycerol, trimethylolpropane, trimethylolethane, pentaerythritol and dipentaerythritol, or a combination thereof.

The person skilled in the art selects the nature and proportion of the polyisocyanate(s), the fluorine-containing polyether polyol(s) and the possible additional polyol(s) for the production of the polyurethane polyol binder in such a manner that a polyurethane polyol binder with the above characteristics regarding hydroxyl content and fluorine content provided by the -OCH₂CₙF₂ₙ₊₁ groups of the at least one fluorine-containing polyether polyol is obtained.

The polyurethane polyol binder may be produced in the presence of a suitable organic solvent (mixture) or the production of the polyurethane polyol binder is carried out without solvent. Polyisocyanate(s), the fluorine-containing polyether polyol(s) and the possible additional polyol(s) may here all be reacted together simultaneously or in two or more synthesis stages. When the synthesis is performed in multiple stages, the reactants may be added in varied order, for example, in succession or in alternating manner. The individual reactants may in each case be added in their entirety or in two or more portions. The reaction is exothermic and the reaction temperature is, for example, 60 to 100°C. The rate of addition or quantity of reactants added is accordingly determined on the basis of the degree of exothermy and the reaction mixture may be maintained within the desired temperature range by heating or cooling.

In another embodiment, the hydroxyl-functional urethane component is a urethane compound with at least one hydroxyl group and at least one terminal group of the formula -NHC(O)OR, wherein R is a residue selected from C₁₋₁₂-alkyl residues, alkyl substituted or unsubstituted cycloaliphatic C₅₋₁₂-hydrocarbyl residues, C₁₋₅-alkoxy C₂₋₆-alkylene residues and C₁₋₅-alkyl-CO₂-C₂₋₁₂-alkylene residues. Examples of C₁₋₁₂-alkyl residues can include methyl, ethyl, the isomeric propyls, the isomeric butyls and lauryl. Examples of alkyl substituted or unsubstituted cycloaliphatic C₅₋₁₂-hydrocarbyl residues can include cyclohexyl, trimethylcyclohexyl and isobornyl. Examples of C₁₋₅-alkoxy C₂₋₆-alkylene residues can include C₄H₉OC₂H₄-, C₂H₅OC₃H₆- and CH₃OC₃H₆-. Examples of C₁₋₅-alkyl-CO₂-C₂₋₁₂-alkylene residues can include C₃H₇CO₂C₈H₁₆-. For brevity, the urethane compound with the at least one hydroxyl group and the at least one terminal urethane group of the formula -NHC(O)OR is also called "urethane compound A" herein.

The urethane compound A may have a number-average molar mass in the range of, for example, 800 to 10000. Its hydroxyl number is in the range of 20 to 150 mg of KOH/g. Its content of terminal urethane groups -NHC(O)OR (calculated as terminal -NHC(O)O-, molar mass = 59) is in the range of 5 to 25 wt.-%. The terminal urethane groups-NHC(O)OR are permanently blocked isocyanate groups. The term "permanently blocked" as opposed to "reversibly blocked" does not mean that the -NHC(O)OR groups of the urethane compound A cannot, under any circumstances, re-cleave into ROH and free isocyanate groups. The term is rather directed towards a person skilled in the art of paint and coatings and it is to be understood in the present context that no such re-cleaving or practically no such re-cleaving takes place during storage, application and thermal curing of a clear coat coating composition of the invention comprising a urethane compound A.

The urethane compound A may be produced by reacting one or more polyisocyanates with one or more polyols and one or more compounds ROH, wherein the polyol(s) comprise the at least one fluorine-containing polyether polyol. In an embodiment, the polyol(s) consist of one or more, in particular one, fluorine-containing polyether polyol.

Examples of polyisocyanates suitable for the production of the urethane compound A are the same as those mentioned above as examples of polyisocyanates suitable for the production of the polyurethane polyol binder.

As already mentioned, the at least one fluorine-containing polyether polyol may be the only polyol building block of the urethane compound A. However, it is also possible to additionally employ other polyol building blocks. Examples of such other additional polyol building blocks suitable for the production of the urethane compound A can include low molar mass polyols defined by empirical and structural formula as well as oligomeric or polymeric polyols with number-average molar masses of, for example, up to 800, for example, fluorine-free polyether polyols, polyester polyols or polycarbonate polyols. Examples of low molar mass polyols defined by empirical and structural formula suitable for the production of the urethane compound A are the same as those mentioned above as examples of low molar mass polyols suitable for the production of the polyurethane polyol binder.

The person skilled in the art selects the nature and proportion of the polyisocyanate(s), the fluorine-containing polyether polyol(s), the ROH compound(s) and the possible additional polyol(s) for the production of the urethane compound A in such a manner that a urethane compound A with the above characteristics regarding hydroxyl content, -NHC(O)OR content and fluorine content provided by the -OCH₂CₙF₂ₙ₊₁ groups of the at least one fluorine-containing polyether polyol is obtained.

The preparation of the urethane compound A can be carried out using processes known to a person skilled in the art. It may, for example, be carried out in the absence or in the presence of an organic solvent (mixture) which is inert towards isocyanate groups. Polyisocyanate(s), the fluorine-containing polyether polyol(s), the possible additional polyol(s) and the ROH compound(s) may here all be reacted together simultaneously or in two or more synthesis stages. When the synthesis is performed in multiple stages, the reactants may be added in varied order, for example, in succession or in alternating manner. The individual reactants may in each case be added in their entirety or in two or more portions. The reaction is exothermic and the reaction temperature is, for example, 60 to 100°C. The rate of addition or quantity of reactants added is accordingly determined on the basis of the degree of exothermy and the reaction mixture may be maintained within the desired temperature range by heating or cooling.

It is preferred that the at least one hydroxyl-functional urethane component comprises or even consists of the aforedisclosed polyurethane polyol binder and/or the aforedisclosed urethane compound A.

In addition to the at least one hydroxyl-functional urethane component, the hydroxyl-functional binder component may also comprise one or more other hydroxyl-functional binders as are conventionally used in the art of paint and coatings. In a typical embodiment, the hydroxyl-functional binder component consists of the hydroxyl-functional urethane component or of the hydroxyl-functional urethane component plus one or more other hydroxyl-functional binders. Examples of such other hydroxyl-functional binders include conventional hydroxyl-functional binders known to the person skilled in the art, and they are readily available commercially or may be prepared by conventional synthesis procedures. Examples of such hydroxyl-functional binders can include polyester polyols, polyurethane polyols other than the at least one hydroxyl-functional urethane component, (meth)acrylic copolymer resin polyols, hydroxyl-functional polymer hybrid resins derived from these classes of resin binders, for example, wherein two or more of said resin types bound by covalent bonds or in the form of interpenetrating resin molecules are present, or a combination of said polymeric polyols. (Meth)acryl or (meth)acrylic is to be understood, both here and in the following, as acryl and/or methacryl or as acrylic and/or methacrylic. The other hydroxyl-functional binders are oligomeric or polymeric compounds with a number-average molar mass (Mn) in the range of, for example, 500 to 10000, preferably 1000 to 5000. Their hydroxyl numbers are in the range of, for example, 50 to 300 mg of KOH/g.

The crosslinker component comprises one or more cross-linking agents conventionally used in clear coating systems based on hydroxyl-functional binders. Examples of suitable cross-linking agents can include transesterification cross-linking agents; amino resin cross-linking agents, such as, melamine-formaldehyde resins; free or reversibly blocked polyisocyanate cross-linking agents; and/or trisalkoxycarbonylaminotriazine cross-linking agents. In case of free or reversibly blocked polyisocyanate cross-linking agents it is preferred not to employ polyisocyanates with aromatically bonded NCO groups.

As already mentioned, the clear coat coating composition of the invention contains organic solvent(s). The organic solvent content may be, for example, 35 to 55 wt.%; the sum of the wt.% of the solids content and the organic solvent content is, for example, 90 to 100 wt.% (any possible difference in the corresponding range of above 0 to 10 wt.% to make up to the total of 100 wt.% is in general formed by volatile additives). The organic solvents are in particular conventional coating solvents, for example, glycol ethers, such as, butyl glycol, butyl diglycol, ethoxypropanol, dipropylene glycol dimethyl ether, dipropylene glycol monomethyl ether, ethylene glycol dimethylether; glycol ether esters, such as, ethyl glycol acetate, butyl glycol acetate, butyl diglycol acetate, methoxypropyl acetate; glycols, for example, propylene glycol and oligomers thereof; esters, such as, butyl acetate, isobutyl acetate, amyl acetate; ketones, such as, methyl ethyl ketone, methyl isobutyl ketone, diisobutyl ketone, cyclohexanone, isophorone; alcohols, such as, methanol, ethanol, (iso)propanol, butanol, hexanol; N-alkyl pyrrolidones, such as, N-ethyl pyrrolidone; aromatic hydrocarbons, such as, xylene, SOLVESSO® 100 (mixture of aromatic hydrocarbons with a boiling range from 155°C to 185°C), SOLVESSO® 150 (mixture of aromatic hydrocarbons with a boiling range from 182°C to 202°C) and aliphatic hydrocarbons. A combination of any of the solvents can also be used.

The clear coat coating composition may also contain volatile or non-volatile additives. Examples of such additives can include catalysts, levelling agents, wetting agents, anticratering agents, dyes, rheology control agents, antioxidants and/or light stabilizers. The additives are used in conventional amounts of, for example, up to 10 wt.% in total, calculated on the resin solids of the clear coat coating composition.

The clear coat coating composition is a transparent coating composition which can be applied and cured to form a transparent clear coat layer. However, this does not necessarily exclude the presence of a small amount of pigments in the clear coat coating composition. For example, if a colored clear coat coating composition is desired, pigments may be comprised.

The clear coat coating composition may also comprise transparent fillers like, for example, silica.

The clear coat coating composition can be spray-applied to form a clear coat layer on an automotive substrate. Therefore, the invention relates also to a process for producing an outer clear coat layer of an automotive multi-layer coating, or, respectively, to a process for the production of an automotive base coat/clear top coat two-layer coating. The process comprises the steps:
(1) providing an automotive substrate provided with an uncured pigmented base coat layer,
(2) applying the clear coat coating composition of the invention on the uncured base coat layer to form a clear coat layer thereon, and
(3) jointly curing the base coat and the clear coat layer.

The automotive substrate provided with the uncured pigmented base coat layer may be an automotive substrate to be OEM (original equipment manufacture) clear coated or an automotive substrate to be repair clear coated. The term "automotive substrate to be OEM clear coated" refers to the case where the clear coat is to be applied as an original coating. The term "automotive substrate to be repair clear coated" refers to the case where the clear coat is to be applied as a refinish clear coat.

Automotive substrates include in particular automotive bodies and automotive body metal or plastic parts. Examples of automotive bodies include truck and vehicle bodies, for example, passenger car bodies and van bodies. Examples of automotive body metal or plastic parts can include doors, bonnets, boot lids, hatchbacks, wings, spoilers, bumpers, collision protection strips, side trim, sills, mirror housings, door handles and hubcaps.

The uncured pigmented base coat layer on the automotive substrate represents the color and/or special effect-imparting coating layer of the automotive multi-layer coating produced by the process of the invention. The uncured pigmented base coat layer may have been applied from an automotive OEM base coat or from an automotive repair base coat.

The clear coat coating composition may be applied by spraying in a dry film thickness in the range of, for example, 20 to 60 µm. The clear coat application is performed by the so-called wet-on-wet method on the uncured pigmented base coat layer. Preferably after a brief flash-off phase the clear coat layer is jointly cured together with the so far uncured pigmented base coat layer. The curing conditions depend on the binder/crosslinker system of the clear coat coating composition and the circumstances under which the coating and curing process is carried out. The curing temperature may range from 20 to 160°C, for example. If the clear coat coating composition is used for refinish coating purposes, more gentle curing conditions may be required than in automotive OEM clear coating. Curing conditions as prevail in automotive OEM coating mean, for example, 20 to 30 minutes at an object temperature of, for example, 80 to 160°C, whereas curing conditions in refinishing may mean an object temperature of, for example, 20 to 80°C, in particular, 20 to 40 minutes at an object temperature of, for example, 40 to 80°C. The object temperatures prevailing during thermal curing are not sufficient to cleave the ROH compound(s) from the isocyanate groups blocked thereby in case the clear coat coating composition comprises a urethane compound A.

The cured automotive multi-layer coating produced by the process of the invention has an outer easy-to-clean clear top coat layer. Its self-cleanability is sustainable; even when exposed to the weather it hardly reduces or it does even not reduce over the clear coat layer's service life.

### Examples

### Example 1 (Preparation of a base paint formulation)

67.6 pbw (parts by weight) of an OH-functional copolymer resin (monomer composition by weight: 62% styrene, 21 % 2-hydroxyethyl methacrylate, 11 % methyl methacrylate, 6% 2-ethylhexyl methacrylate), 7.2 pbw of an OH-functional polyester resin (polyester composition by weight: 54% 2,3-epoxypropyl neodecanoate, 36% methylhexahydrophthalic anhydride, 10% pentaerythritol), 6.7 pbw methyl isobutyl ketone, 6.7 pbw butyl acetate, 0.6 pbw of an UV absorber and 0.01 pbw of dibutyltindilaurate were mixed together as a base paint.

### Example 2 (Preparation of a polyisocyanate crosslinker formulation)

73 pbw trimeric 1,6-hexane diisocyanate (DESMODUR® N 3600 from Bayer AG, Leverkusen, Germany) were mixed with 5.6 pbw of butyl acetate and 33.7 pbw of propylene glycol monobutyl ether acetate.

### Example 3 (Preparation of a hydroxyl-functional urethane component comprising an aliphatic polyetherdiol with -OCH₂C₂F₅ groups as building block)

In a reactor equipped with stirrer, thermometer and condenser 36 grams of butyl acetate, 58.2 grams ethylhexanediol, 16.2 grams of POLYFOX™ PF-656 and 0.1 grams dibutyltindilaurate were mixed and heated at 80°C. 75.6 grams trimeric 1,6-hexane diisocyanate (DESMODUR® N 3600 from Bayer AG, Leverkusen, Germany) were added in 90 minutes at 80°C. After the end of the addition reaction (no free NCO detectable) 13.9 grams of butyl acetate were added to the mixture.

### Example 4 (Preparation of a clear coat coating composition, according to the invention)

95 pbw of the base paint of example 1 were thoroughly mixed with 2 pbw of the mixture obtained in example 3 and then further mixed with 37.4 pbw of the polyisocyanate crosslinker formulation of example 2.

### Example 5 (Preparation of a clear coat coating composition, comparative example)

95 pbw of the base paint of example 1 were mixed with 37.4 pbw of the polyisocyanate crosslinker formulation of example 2.

### Example 6 (Self-cleanability testing)

To understand the self-cleanability properties of the clear coat systems of examples 4 and 5, the latter were applied to test panels in a dry film thickness of 30 µm. The panels were baked 30 min at 60°C and the first testing was done after 3 days of application.

The self-cleanability of the panels was tested by applying Leverkusen standard dirt 09 LD-40 to all but a 4 centimeter portion of one end of the horizontally positioned panels. Dirt application was performed making use of a sieve. Three 25µl drops of deionized water were placed on the unsoiled area of the coated panels. The unsoiled end of the panels was slowly and continuously raised from the horizontal position to a 30° angle causing the water drops to move through the soiled area. After 5 minutes the position of the water drops was recorded and it was visually rated how much dirt the water drops on their move downwards had removed from the surface. The coated panels were then carefully cleaned to remove any remaining dirt and they were thereafter subjected to artificial weathering conditions (500 hours according to SAE J2527). Then the self-cleanability test was repeated followed by further cycles of artificial weathering and self-cleanability testing. Finally, self-cleanability data comprising the initial self-cleanability and self-cleanability after 500, 1000 and 2000 hours of artificial weathering were obtained and a trend was estimated, if or to what extent the self-cleanability of the clear coat layer reduces over time when exposed to the weather. The rating was done in numbers (1= excellent dirt removal, 3 = medium dirt removal, 6 = no dirt removal) and letters (A = water droplet went to the bottom of the panel, B = droplet stopped at the second half of the panel; C = droplet stopped at the first half of the panel):

| **Clear coat example** | **Hours of artificial weathering** | | | |
|---|---|---|---|---|
| | 0 | 500 | 1000 | 2000 |
| 4 | 1A | 1A | 1A | 3A |
| 5 | 1A | 1A | 3B | 6C |

## Claims

1. A clear coat coating composition with a resin solids content comprising a hydroxyl-functional binder component and a crosslinker component, wherein the hydroxyl-functional binder component comprises at least one hydroxyl-functional urethane component comprising at least one aliphatic polyether polyol having -OCH₂CₙF₂ₙ₊₁ groups with n = 1 or 2 as a building block, and wherein said -OCH₂CₙF₂ₙ₊₁ groups provide the clear coat coating composition with a fluorine content of 0.1 to 3 wt.%, calculated on the resin solids content of the clear coat coating composition.

2. The clear coat coating composition of claim 1, wherein the crosslinker component comprises one or more cross-linking agents selected from transesterification cross-linking agents; amino resin cross-linking agents, free polyisocyanate cross-linking agents, reversibly blocked polyisocyanate cross-linking agents, and trisalkoxycarbonylaminotriazine cross-linking agents.

3. The clear coat coating composition of claim 1 or 2 containing organic solvent(s).

4. The clear coat coating composition of claim 1, 2 or 3, wherein the at least one fluorine-containing polyether polyol has a fluorine content provided by its -OCH₂CₙF₂ₙ₊₁ groups in the range of 24 to 40 wt.%.

5. The clear coat coating composition of any one of the preceding claims, wherein the at least one fluorine-containing polyether polyol is a polyether diol of the formula
HO[CH₂C(CH₃)(CH₂OCH₂CF₃)CH₂O]ₓCH₂C(CH₃)₂CH₂-[OCH₂C(CH₃)(CH₂OCH₂CF₃)CH₂]_{y}OH with x+y = 6 on average.

6. The clear coat coating composition of any one of claims 1 to 4, wherein the at least one fluorine-containing polyether polyol is a polyether diol of the formula
HO[CH₂C(CH₃)(CH₂OCH₂C₂F₅)CH₂O]ₓCH₂C(CH₃)₂CH₂-[OCH₂C(CH₃)(CH₂OCH₂C₂F₅)CH₂]_{y}OH with x+y = 6 on average.

7. The clear coat coating composition of any one of the preceding claims, wherein the proportion of the at least one fluorine-containing polyether polyol chemically incorporated in the at least one hydroxyl-functional urethane component in the clear coat coating composition is in the range of 0.5 to 8 wt.%, calculated on the resin solids of the clear coat coating composition.

8. The clear coat coating composition of any one of the preceding claims wherein the at least one hydroxyl-functional urethane component is selected from the group consisting of urethane compounds with at least one hydroxyl group and at least one terminal urethane group of the formula -NHC(O)OR, polyurethane polyol binders having no terminal groups of the formula -NHC(O)OR, and combinations thereof, wherein R is a residue selected from C₁₋₁₂-alkyl residues, alkyl substituted or unsubstituted cycloaliphatic C₅₋₁₂-hydrocarbyl residues, C₁₋₅-alkoxy C₂₋₆-alkylene residues and C₁₋₅-alkyl-CO₂-C₂₋₁₂-alkylene residues.

9. A process for the production of an automotive base coat/clear top coat two-layer coating comprising the steps:
(1) providing an automotive substrate provided with an uncured pigmented base coat layer,
(2) applying the clear coat coating composition of any one of the preceding claims on the uncured base coat layer to form a clear coat layer thereon, and
(3) jointly curing the base coat and the clear coat layer.

## Patentansprüche

1. Klarlackbeschichtungszusammensetzung mit einem Harzfeststoffgehalt umfassend eine hydroxyfunktionelle Bindemittelkomponente und eine Vernetzungsmittelkomponente, wobei die hydroxyfunktionelle Bindemittelkomponente mindestens eine hydroxyfunktionelle Urethankomponente umfasst, die mindestens ein aliphatisches Polyetherpolyol umfasst, das -OCH₂CₙF₂ₙ₊₁-Gruppen mit n = 1 oder 2 als Baustein umfasst, und wobei die -OCH₂CₙF₂ₙ₊₁-Gruppen die Klarlackbeschichtungszusammensetzung mit einem Fluorgehalt von 0,1 bis 3 Gew.-%, auf den Harzfeststoffgehalt der Klarlackbeschichtungszusammensetzung bezogen berechnet, versehen.

2. Klarlackbeschichtungszusammensetzung nach Anspruch 1, wobei die Vernetzungsmittelkomponente ein oder mehrere Vernetzungsmittel umfasst ausgewählt unter Umesterungsvernetzungsmitteln, Aminoharzvernetzungsmitteln, Vernetzungsmitteln von freiem Polyisocyanat, Vernetzungsmitteln von reversibel blockiertem Polyisocyanat und Trisalkoxycarbonylaminotriazin-Vernetzungsmitteln.

3. Klarlackbeschichtungszusammensetzung nach Anspruch 1 oder 2, organische(s) Lösungsmittel enthaltend.

4. Klarlackbeschichtungszusammensetzung nach Anspruch 1, 2 oder 3, wobei das mindestens eine fluorhaltige Polyetherpolyol einen Fluorgehalt, der von seinen -OCH₂CₙF₂ₙ₊₁-Gruppen bereitgestellt wird, im Bereich von 24 bis 40 Gew.-% aufweist.

5. Klarlackbeschichtungszusammensetzung nach einem der vorhergehenden Ansprüche, wobei das mindestens eine fluorhaltige Polyetherpolyol ein Polyetherdiol der Formel
HO[CH₂C(CH₃)(CH₂OCH₂CF₃)CH₂O]ₓCH₂C(CH₃)₂CH₂-[OCH₂C(CH₃)(CH₂OCH₂CF₃)CH₂]_{y}OH mit x+y = 6 im Durchschnitt ist.

6. Klarlackbeschichtungszusammensetzung nach einem der Ansprüche 1 bis 4, wobei das mindestens eine fluorhaltige Polyetherpolyol ein Polyetherdiol der Formel
HO[CH₂C(CH₃)(CH₂OCH₂C₂F₅)CH₂O]ₓCH₂C(CH₃)₂CH₂-[OCH₂C(CH₃)(CH₂OCH₂C₂F₅)CH₂]_{y}OH mit x+y = 6 im Durchschnitt ist.

7. Klarlackbeschichtungszusammensetzung nach einem der vorhergehenden Ansprüche, wobei das Verhältnis des mindestens einen fluorhaltigen Polyetherpolyols, das chemisch in die mindestens eine fluorhaltige hydroxyfunktionelle Urethankomponente in der Klarlackbeschichtungszusammensetzung integriert ist, im Bereich von 0,5 bis 8 Gew.-%, auf die Harzfeststoffe der Klarlackbeschichtungszusammensetzung bezogen berechnet, liegt.

8. Klarlackbeschichtungszusammensetzung nach einem der vorhergehenden Ansprüche, wobei die mindestens eine hydroxyfunktionelle Urethankomponente aus der Gruppe ausgewählt ist bestehend aus Urethanverbindungen mit mindestens einer Hydroxylgruppe und mindestens einer endständigen Urethangruppe der Formel -NHC(O)OR, Polyurethanpolyolbindemittel aufweisend keine endständigen Gruppen der Formel -NHC(O)OR und Kombinationen davon, wobei R ein Rest ist ausgewählt unter C₁-₁₂-Alkylresten, alkylsubstituierten oder unsubstituierten cycloaliphatischen C₅-₁₂-Hydrocarbylresten, C₁-₅-Alkoxy-C₂-₆-alkylenresten und C₁-₅-Alkyl-CO₂-C₂-₁₂-alkylenresten.

9. Verfahren für die Herstellung einer zweischichtigen Fahrzeugbeschichtung aus Grundlack/Klardecklack, umfassend die Schritte:
(1) Bereitstellen eines Fahrzeugsubstrats, das mit einer nicht ausgehärteten pigmentierten Grundlackschicht versehen ist,
(2) Aufbringen der Klarlackbeschichtungszusammensetzung nach einem der vorhergehenden Ansprüche auf die nicht ausgehärtete Grundlackschicht, um eine Klarlackschicht darauf zu bilden, und
(3) zusammen Aushärten der Grundlack- und der Klarlackschicht.

## Revendications

1. Composition de revêtement de couche transparente avec une teneur en matières solides résineuses comprenant un composant liant à fonctionnalité hydroxyle et un composé de réticulation, dans laquelle le composant liant à fonctionnalité hydroxyle comprend au moins un composant uréthane à fonctionnalité hydroxyle comprenant au moins un polyol de polyéther aliphatique ayant des groupes -OCH₂CₙF₂ₙ₊₁ avec n = 1 ou 2 en tant que bloc de construction, et dans laquelle lesdits des groupes -OCH₂CₙF₂ₙ₊₁ fournissent la composition de revêtement de couche transparente avec une teneur en fluor de 0,1 à 3 % en poids, calculée sur les matières solides résineuses de la composition de revêtement de couche transparente.

2. Composition de revêtement de couche transparente selon la revendication 1, dans laquelle le composant de réticulation comprend un ou plusieurs agents de réticulation choisis parmi les agents de réticulation de transestérification, les agents de réticulation de résine aminée, les agents de réticulation exempts de polyisocyanate libres, les agents de réticulation de polyisocyanate bloqués de manière réversible et les agents de réticulation de trisalcoxycarbonylaminotriazine.

3. Composition de revêtement de couche transparente selon la revendication 1 ou 2, contenant un ou plusieurs solvants organiques.

4. Composition de revêtement de couche transparente selon la revendication 1, 2 ou 3, dans laquelle l'au moins un polyol de polyéther contenant du fluor a une teneur en fluor fournie par ses groupes -OCH₂CₙF₂ₙ₊₁ comprise dans la plage allant de 24 à 40 % en poids.

5. Composition de revêtement de couche transparente selon l'une quelconque des revendications précédentes, dans laquelle l'au moins un polyol de polyéther contenant du fluor est un diol de polyéther de formule
HO[CH₂C(CH₃)(CH₂OCH₂CF₃)CH₂O]ₓCH₂C(CH₃)₂CH₂-[OCH₂C(CH₃)(CH₂OCH₂CF₃)CH₂]_{y}OH avec x+y = 6 en moyenne.

6. Composition de revêtement de couche transparente selon l'une quelconque des revendications 1 à 4, dans laquelle l'au moins un polyol de polyéther contenant du fluor est un diol de polyéther de formule
HO[CH₂C(CH₃)(CH₂OCH₂C₂F₅)CH₂O]ₓCH₂C(CH₃)₂CH₂-[OCH₂C(CH₃)(CH₂OCH₂C₂F₅)CH₂]_{y}OH avec x+y = 6 en moyenne.

7. Composition de revêtement de couche transparente selon l'une quelconque des revendications précédentes, dans laquelle l'au moins un polyol de polyéther contenant du fluor chimiquement incorporé dans l'au moins un composant uréthane à fonctionnalité hydroxyle dans la composition de revêtement de couche transparente est compris dans la plage allant de 0,5 à 8 % en poids, calculé sur les matières solides résineuses de la composition de revêtement de couche transparente.

8. Composition de revêtement de couche transparente selon l'une quelconque des revendications précédentes, dans laquelle l'au moins un composant uréthane à fonctionnalité hydroxyle est choisi dans le groupe constitué par les composés uréthane ayant au moins un groupe hydroxyle et au moins un groupe uréthane terminal de formule -NHC(O)OR, des liants de polyol de polyuréthane n'ayant pas de groupes terminaux de formule -NHC(O)OR et des combinaisons de ceux-ci, où R est un résidu choisi parmi les résidus alkyle en C₁ à C₁₂, les résidus hydrocarbyle en C₅ à C₁₂ cycloaliphatiques non substitués ou substitués par un groupe alkyle, les résidus (alcoxy en C₁ à C₅)alkylène en C₂ à C₆ et les résidus alkyle en C₁ à C₅-CO₂-alkylène en C₂ à C₁₂.

9. Procédé de production d'un revêtement bicouche d'une couche de base/couche de finition transparente pour automobile comprenant les étapes consistant à :
(1) fournir un substrat automobile muni d'une couche de base pigmentée non durcie,
(2) appliquer la composition de revêtement de couche transparente selon l'une quelconque des revendications précédentes sur la couche de base non durcie pour former une couche transparente sur celle-ci, et
(3) durcir conjointement la couche de base et la couche transparente.
